# EUROPEAN PATENT APPLICATION

(11) **EP 3 713 260 A1**
(43) Date of publication of application: **23.09.2020**
(21) Application number: 19163738.8
(22) Date of filing: 19.03.2019
(51) Int. Cl.: H04W 4/50, H04W 12/00

(54) **USER EQUIPMENT AND NETWORK ENTITY FOR COMMUNICATION NETWORK USING NETWORK SLICING**

(71) Applicant: Deutsche Telekom AG, 53113 Bonn (DE); Giesecke+Devrient Mobile Security GmbH, 81677 München (DE)
(72) Inventor: SCHNIEDERS, Dominik, 52078 Aachen (DE); SPITZ, Stephan, 85757 Karlsfeld (DE)
(74) Representative: Braun-Dullaeus Pannen Emmerling Patent- & Rechtsanwaltspartnerschaft mbB

(57) **Abstract**

The invention relates to a user equipment (120) for a mobile communication network (100), in particular a 5G mobile communication network (100). The user equipment (120) comprises: a first communication interface (123) for communicating with a first network slice (133) of the mobile communication network (100); a second communication interface (125) for communicating with a second network slice (135) of the mobile communication network (100); and a processing unit (121) in communication with the first communication interface (123) and the second communication interface (125), wherein the processing unit (121) is adapted to exchange data with the first network slice (133) and to configure a data exchange with the second network slice (135) on the basis of the data exchanged with the first network slice (133). Moreover, the invention relates to network entity (140, 150) for the mobile communication network (100). The network entity (140, 150) comprises: a first communication interface (143) for communicating via a first network slice (133) of the mobile communication network (100) with a user equipment (120) of the mobile communication network (100); a second communication interface (145) for communicating via a second network slice (135) of the mobile communication network (100) with the user equipment (120); and a processing unit (141) in communication with the first communication interface (143) and the second communication interface (145), wherein the processing unit (141) is adapted to exchange data with the user equipment (120) via the first network slice (133) and to configure a data exchange with the user equipment (120) via the second network slice (135) on the basis of the data exchanged with the user equipment (120) via the first network slice (133).

## Description

### TECHNICAL FIELD

In general, the invention relates to mobile communication networks. More specifically, the invention relates to a user equipment and a network entity for a mobile communication network with a plurality of network slices.

### BACKGROUND

In current mobile communication networks, in particular 3G and 4G LTE systems, the core network generally has a static architecture. Control plane network functions and data plane (also referred to as user plane) network functions are generally provided by the fixed network elements of the core network, such as, in case of 4G LTE systems, a Mobility Management Entity (MME), a Serving Gateway (SGW), a PDN Gateway (PGW) and the like. These network elements handle all the network traffic that passes through the Evolved Packet Core (EPC) regardless of the type of services associated with the network traffic.

In comparison to current mobile communication systems, the future 5th Generation mobile technology (5G) will provide services to user equipments, i.e. communication end nodes of the mobile network with an enormous variety of performance attributes, for instance, ultra-reliable and/or ultra-low latency communication for mission critical services, eHealth, public safety, real-time vehicle control, tactile Internet, connectivity for drones to name a few. To support services with such a diverse range of requirements, network slices and logical network functions are expected to be among the key building blocks of future 5G networks.

Generally, a network slice is implemented on the physical network resources, i.e. the physical infrastructure of a mobile communication network, such as servers, routers, base stations and the like and often comprises a collection of logical network functions that support the communication services for specific use cases. These logical network functions are often implemented in a control plane of a network slice and can be considered to run on one or more virtual machines being part the network slice. The virtual machines, in turn, are implemented on the physical network resources of the mobile communication network.

In contrast to traditional core networks, which have been designed as a single network architecture supporting a maximum level of connectivity and providing multiple services, network slicing allows networks to be logically separated with each network slice providing customized connectivity as well as other network functions and/or services, and all network slices can share the same or similar functional components. Network slicing thus significantly increases flexibility and dynamicity of the core network and allows, for instance, implementing an access-agnostic core. Thus, network slicing will be one of the main features for 5G developments and enable provision of service- and customer-tailored network functions, aiming especially at vertical integration of industries.

There is a need for an improved user equipment and an improved network entity for a mobile communication network with a plurality of network slices.

### SUMMARY OF THE INVENTION

The foregoing and other objects are achieved by the subject matter of the independent claims. Further implementation forms are apparent from the dependent claims, the description and the figures.

According to a first aspect the invention relates to a user equipment for a mobile communication network, in particular a 5G mobile communication network. The user equipment comprises: a first communication interface for communicating with a first network slice of the mobile communication network; a second communication interface for communicating with a second network slice of the mobile communication network; and a processing unit in communication with the first communication interface and the second communication interface, wherein the processing unit is adapted to exchange data with the first network slice and to configure a data exchange with the second network slice on the basis of the data exchanged with the first network slice.

According to an embodiment, the first network slice has a longer radio range, lower radio power and/or lower radio bandwidth than the second network slice.

According to an embodiment, the first network slice is a massive Machine Type Communication, mMTC, slice of the mobile communication network, wherein the first communication interface is a mMTC communication interface adapted to communicate with the mMTC slice of the mobile communication network. According to an embodiment, the mMTC slice of the mobile communication network can be a narrowband loT slice of the mobile communication network.

According to an embodiment, the second network slice is an enhanced Mobile Broadband, eMBB, slice of the mobile communication network, wherein the second communication interface is a eMBB communication interface adapted to communicate with the eMBB slice of the mobile communication network.

According to an embodiment, the second network slice is an Ultra-reliable and Low-Latency Communication, URLLC, slice of the mobile communication network, wherein the second communication interface is a URLLC communication interface adapted to communicate with the URLLC slice of the mobile communication network.

According to an embodiment, the processing unit is adapted to exchange security-relevant control data with the first network slice and to configure the data exchange with the second network slice on the basis of the data exchanged with the first network slice by securing the data exchange with the second network slice on the basis of the security-relevant control data.

According to an embodiment, the security-relevant control data comprises a hash value or a cryptographic checksum value of data to be exchanged with the second network slice and/or a cryptographic key for securing the data exchange with the second network slice.

According to an embodiment, the processing unit comprises a hardware security enclave, wherein the hardware security enclave is configured to process and/or store the security-relevant control data exchanged with the first network slice.

According to an embodiment, the processing unit is adapted to exchange communication session related control data with the first network slice and to configure the data exchange with the second network slice on the basis of the data exchanged with the first network slice by establishing a new communication session or resuming a terminated communication session with the second network slice on the basis of the communication session related control data exchanged with the first network slice.

According to an embodiment, the processing unit is adapted to establish the new communication session or resume the terminated communication session with the second network slice on the basis of the communication session related control data exchanged with the first network slice, in response to a failed attempt to connect to the second network slice or in response to a termination of a communication session with the second network slice.

According to an embodiment, the processing unit is further adapted to terminate a communication session with the first network slice, once the new communication session has been established or the terminated communication session has been resumed with the second network slice on the basis of the communication session related control data exchanged with the first network slice.

According to an embodiment, the user equipment further comprises an electronic or physical subscriber identity module, SIM, wherein the SIM is adapted to authorize access of the user equipment to the first network slice and/or the second network slice.

According to a second aspect the invention relates to a network entity for a mobile communication network, in particular a 5G mobile communication network. The network entity comprises: a first communication interface for communicating via a first network slice of the mobile communication network with a user equipment of the mobile communication network; a second communication interface for communicating via a second network slice of the mobile communication network with the user equipment; and a processing unit in communication with the first communication interface and the second communication interface, wherein the processing unit is adapted to exchange data with the user equipment via the first network slice and to configure a data exchange with the user equipment via the second network slice on the basis of the data exchanged with the user equipment via the first network slice.

According to an embodiment, the first network slice has a longer radio range, lower radio power and/or lower radio bandwidth than the second network slice.

According to an embodiment, the first network slice is a massive Machine Type Communication, mMTC, slice of the mobile communication network, wherein the first communication interface is a mMTC communication interface adapted to communicate with the user equipment via the mMTC slice of the mobile communication network.

According to an embodiment, the second network slice is an enhanced Mobile Broadband, eMBB, slice of the mobile communication network, wherein the second communication interface is a eMBB communication interface adapted to communicate with the user equipment via the eMBB slice of the mobile communication network.

According to an embodiment, the second network slice is an Ultra-reliable and Low-Latency Communication, URLLC, slice of the mobile communication network, wherein the second communication interface is a URLLC communication interface adapted to communicate with the user equipment via the URLLC slice of the mobile communication network.

According to an embodiment, the processing unit is adapted to exchange security-relevant control data with the user equipment via the first network slice and to configure the data exchange with the user equipment via the second network slice on the basis of the data exchanged with the user equipment via the first network slice by securing the data exchange with the user equipment via the second network slice on the basis of the security-relevant control data.

According to an embodiment, the processing unit is adapted to exchange communication session related control data with the user equipment via the first network slice and to configure the data exchange with the user equipment via the second network slice on the basis of the data exchanged with the user equipment via the first network slice by establishing a new communication session or resuming a terminated communication session with the user equipment via the second network slice on the basis of the communication session related control data exchanged with user equipment via the first network slice.

According to an embodiment, the network entity comprises an edge server located in or close to a radio access network of the mobile communication network.

According to an embodiment, the network entity comprises a management server located in a core network of the mobile communication network.

According to an embodiment, the processing unit is further configured to implement a discovery mechanism, wherein the discovery mechanism is configured to select, in response to a request by the user equipment for establishing a new communication session or resuming a terminated communication session with the second network slice of the mobile communication network, an edge server and to provide an application on the edge server.

According to a third aspect the invention relates to a mobile communication network, in particular a 5G mobile communication network comprising: a first network slice, a second network slice, a user equipment according to the first aspect of the invention and a network entity according to the second aspect of the invention.

Thus, embodiments of the invention are applicable for communication end devices, i.e. user equipments that use multiple communication channels with different characteristics, such as one long range communication channel and another communication channel for high bandwidth data traffic. These communication channels are provided by network slices of the mobile communication network, in particular a 5G network having a software defined network architecture. In embodiments of the present invention the communication devices, i.e. user equipments may be capable of communicating content, data, information and/or signals via two or more communication channels with different characteristics provided by the different network slices. Preferable these are wireless channels in the 5G network, but not limited to this and any combination of wireless or wired communication is possible.

In embodiments of the present invention the communication devices, i.e. user equipments may include one or more radio modules (or short radios) including circuitry and/or logic to implement this invention.

In embodiments of the present invention the radio modules may include one or more wireless receivers (Rx) including circuitry and/or logic to receive wireless communication signals, RF signals, frames, blocks, transmission streams, packets, messages, data items, and/or data.

In embodiments of the present invention the radio modules may include one or more wireless transmitters (Tx) including circuitry and/or logic to transmit wireless communication signals, RF signals, frames, blocks, transmission streams, packets, messages, data items, and/or data. In embodiments of the present invention, the radio modules may include Radio Frequency (RF) elements, baseband elements, modulation elements, demodulation elements, amplifiers, analog to digital and/or digital to analog converters, filters and the like, which can be implemented in hardware and/or software.

In embodiments of the present invention the radio modules may be configured to communicate according to an OFDM scheme and/or an FDMA scheme in an uplink direction and/or a downlink direction. In other embodiments, the radios of the communication devices may be configured to communicate according to any other additional or alternative modulation scheme. In embodiments of the present invention, the radios may include, or may be associated with, one or more antennas. In one example, a communication device may include a single antenna. In another example, a communication device, i.e. user equipment may include two or more antennas. Such antennas may include any type of antennas suitable for transmitting and/or receiving wireless communication signals, blocks, frames, transmission streams, packets, messages and/or data. The antennas may include, for example, antennas suitable for directional communication, e.g., using beamforming techniques. For example, the antennas may include a phased array antenna, a multiple element antenna, a set of switched beam antennas, and/or the like. In some embodiments, the antennas may implement transmit and receive functionalities using separate transmit and receive antenna elements. In some embodiments, the antennas may implement transmit and receive functionalities using common and/or integrated transmit/receive elements.

In embodiments of the present invention the processor of the communication device, i.e. user equipment may be configured to perform and/or to trigger, cause, instruct and/or control the communication device to perform, one or more communications, to generate and/or communicate one or more messages and/or transmissions, and/or to perform one or more functionalities, operations and/or procedures. In embodiments of the present invention the processor may include circuitry and/or logic, Media-Access Control (MAC) circuitry and/or logic, Physical Layer (PHY) circuitry and/or logic, and/or any other circuitry and/or logic, configured to perform the functionality of the processor.

In embodiments of the present invention, at least part of the functionality of the processor may be implemented by an integrated circuit, for example, a chip, e.g., a System on Chip (SoC). In one example, the chip or SoC may be configured to perform one or more functionalities of the radio as well. For example, the chip or SoC may include one or more elements of the processor and/or one or more elements of the radio. In one example, the processor and the radio may be implemented as part of the chip or SoC.

Embodiments of the invention can be implemented in hardware and/or software.

### BRIEF DESCRIPTION OF THE DRAWINGS

Further embodiments of the invention will be described with respect to the following figure(s), wherein:

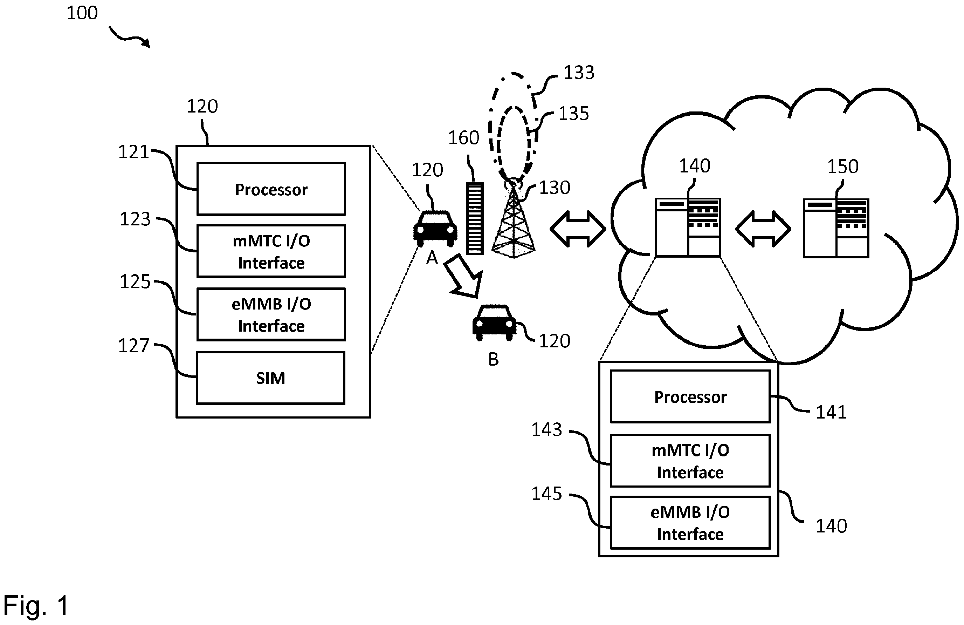

Fig. 1 shows a schematic block diagram illustrating a communication network comprising a user equipment and a network entity according to an embodiment.

In the various figures, identical reference signs will be used for identical or at least functionally equivalent features.

### DETAILED DESCRIPTION OF EMBODIMENTS

In the following detailed description, reference is made to the accompanying drawings, which form part of the disclosure, and in which are shown, by way of illustration, specific aspects in which the present invention may be placed. It is understood that other aspects may be utilized, and structural or logical changes may be made without departing from the scope of the present invention. The following detailed description, therefore, is not to be taken in a limiting sense, as the scope of the present invention is defined by the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

Figure 1 shows a schematic diagram of a mobile, i.e. cellular communication network 100. The mobile communication network 100 comprises, i.e. implements a first network slice 133 and a second network slice 135. In an embodiment, the mobile communication network 100 is a 5G mobile communication network 100. The mobile communication network 100 can comprises a radio access network, a core network and one or more user equipments 120.

The network architecture for supporting embodiments of the invention, such as the architecture of the mobile communication network 100 shown in figure 1, may be either realized according to Network Function Virtualization (NFV) and Software Defined Networks (SDN) paradigms or may rely on dedicated hardware appliances or entities. The network slices 133, 135 may be built upon virtual and/or physical infrastructures, including wireless Access Points (APs), Data Centers, Edge Cloud, Edge Data Centers and/or Points of Presence, interconnected by a transport network realized either by legacy connectivity methods or by, for instance, virtual links, virtual switches and virtual routers controlled by SDN controllers. The network slices 133, 135 can be implemented on physical infrastructure, such as one or more servers, of the mobile communication network 100. Moreover, the core network of the mobile communication network 100 can comprise one or more network orchestrators (not shown in figure 1) configured to implement and operate the network slices 133, 135 in the mobile communication network 100.

In the exemplary embodiment shown in figure 1, an exemplary user equipment 120 is implemented as a vehicular user equipment or, more specifically, a communication module thereof. As will be appreciated, however, according to embodiments of the invention the user equipment 120 could be implemented as another type of communication device as well, such as a mobile phone or any other type of mobile or stationary communication device configured for communication in the mobile communication network 100.

For the sake of clarity figure 1 shows only a single exemplary base station 130, which constitutes part of the radio access network of the mobile communication network 100. In other embodiments the radio access network of the mobile communication network 100 comprises a plurality of base stations similar to the exemplary base station 130 shown in figure 1.

The core network of the mobile communication network 100 comprises entities or functions for operating the mobile communication network 100, such as a network entity 150 in form of a management entity or server 150. In the exemplary embodiment shown in figure 1 the core network of the mobile communication network 100 comprises, for instance, a network management entity 150 implemented, for instance, as authentication entity configured to perform an authentication procedure with the user equipment 120 before granting full access to the communication network 100.

The mobile communication network 100 can provide edge computing resources. For the sake of clarity figure 1 shows only a single exemplary network entity 140 in the RAN, in particular an edge server 140 providing such edge computing resources. In other embodiments the mobile communication network 100 can comprise a plurality of edge servers similar to the exemplary edge server 140 shown in figure 1 for providing edge computing resources. The edge server 140 can be located in close proximity to the base station 130 for providing, in particular, a small latency of the roundtrip time (RTT) between the edge server 140 and the user equipment 120.

As can be taken from the more detailed view shown in figure 1, the user equipment 120 comprises a first communication interface 123 for communicating with the first network slice 133 of the mobile communication network 100 and a second communication interface 125 for communicating with the second network slice 135 of the mobile communication network 100. Moreover, the user equipment 120 comprises a processing unit 121 in communication with the first communication interface 123 and the second communication interface 125, wherein, as will be described in more detail below, the processing unit 121 is adapted to exchange data with the first network slice 133 and to configure a data exchange with the second network slice 135 on the basis of the data exchanged with the first network slice 133.

Likewise, the network entity 140, i.e. the edge server 140 located in or close to the radio access network of the mobile communication network 100 and/or the network entity 150, i.e. the management entity 150 located in the core network of the mobile communication network 100 (for the sake of clarity the following components are only illustrated for the edge server 140 in figure 1) comprises a first communication interface 143 for communicating via the first network slice 133 of the mobile communication network 100 with the user equipment 120 and a second communication interface 145 for communicating via the second network slice 135 of the mobile communication network 100 with the user equipment 120. Moreover, the network entity 140, i.e. the edge server 140 located in or close to the radio access network of the mobile communication network 100 and/or the network entity 150, i.e. the management entity 150 located in the core network of the mobile communication network 100 comprises a processing unit 141 in communication with the first communication interface 143 and the second communication interface 145, wherein the processing unit 141 is adapted, as will be described in more detail below, to exchange data with the user equipment 120 via the first network slice 133 and to configure a data exchange with the user equipment 120 via the second network slice 135 on the basis of the data exchanged with the user equipment 120 via the first network slice 133.

According to an embodiment, the first network slice 133 has a longer radio range (as illustrated in figure 1), a lower radio power and/or a lower radio bandwidth than the second network slice 135.

According to an embodiment, the first network slice 133 is a massive Machine Type Communication, mMTC, slice 133 of the mobile communication network 100, wherein the first communication interface 123 of the user equipment 120 is a mMTC communication interface 123 adapted to communicate with the mMTC slice 133, as illustrated in figure 1. Likewise, the fist communication interface of the network entity 140, 150 can be a mMTC communication interface 143. According to an embodiment, the mMTC slice 133 of the mobile communication network 100 can be a narrowband loT slice of the mobile communication network 100.

According to an embodiment, the second network slice 135 is an enhanced Mobile Broadband, eMBB, slice 135 of the mobile communication network 100, wherein the second communication interface 125 of the user equipment 120 is a eMBB communication interface 125 adapted to communicate with the eMBB slice 135 of the mobile communication network 100, as illustrated in figure 1. Likewise, the second communication interface 145 of the network entity 140, 150 can be a eMBB communication interface 143.

According to a further embodiment, the second network slice 135 is a Ultra-reliable and Low-Latency Communication, URLLC, slice 135 of the mobile communication network 100, wherein the second communication interface 125 of the user equipment 120 is a URLLC communication interface 125 adapted to communicate with the URLLC slice 135 of the mobile communication network 100. Likewise, the second communication interface 145 of the network entity 140, 150 can be a URLLC communication interface 143.

According to an embodiment, the processing unit 121 of the user equipment 120 is adapted to exchange security-relevant control data with the first network slice 133 and to configure the data exchange with the second network slice 135 on the basis of the data exchanged with the first network slice 133 by securing the data exchange with the second network slice 135 on the basis of the security-relevant control data. Likewise, the processing unit 141 of the network entity 140, 150 is adapted to exchange security-relevant control data with the user equipment 120 via the first network slice 133 and to configure the data exchange with the user equipment 120 via the second network slice 135 on the basis of the data exchanged with the user equipment 120 via the first network slice 133 by securing the data exchange with the user equipment 120 via the second network slice 135 on the basis of the security-relevant control data.

According to an embodiment, the security-relevant control data comprises a hash value or a cryptographic checksum value of data to be exchanged with the second network slice 135 and/or a cryptographic key for securing the data exchange with the second network slice 135.

According to an embodiment, the processing unit 121 of the user equipment comprises a hardware security enclave, wherein the hardware security enclave is configured to process and/or store the security-relevant control data exchanged with the first network slice 133.

According to an additional or alternative embodiment, the processing unit 121 is adapted to exchange communication session related control data with the first network slice 133 and to configure the data exchange with the second network slice 135 on the basis of the data exchanged with the first network slice 133 by establishing a new communication session or resuming a terminated communication session with the second network slice 135 on the basis of the communication session related control data exchanged with the first network slice 133. Likewise, the processing unit 141 can be adapted to exchange communication session related control data with the user equipment 120 via the first network slice 133 and to configure the data exchange with the user equipment 120 via the second network slice 135 on the basis of the data exchanged with the user equipment 120 via the first network slice 133 by establishing a new communication session or resuming a terminated communication session with the user equipment 120 via the second network slice 135 on the basis of the communication session related control data exchanged with the user equipment 120 via the first network slice 133.

According to an embodiment, the communication session related control data can comprise one of more of the following: information about available frequency bands for communicating with and/or within the second network slice 133; information about a time duration for the communication session with and/or within the second network slice 133; and/or information about a service required by the user equipment 120 provided by the second network slice 133, for instance, a service supporting autonomous driving.

According to an embodiment, the processing unit 121 of the user equipment 120 is adapted to establish the new communication session or resume the terminated communication session with the second network slice 135 on the basis of the communication session related control data exchanged with the first network slice 133, in response to a failed attempt to connect to the second network slice 135 or in response to a termination of a communication session with the second network slice 135.

In figure 1 two exemplary locations A and B of the user equipment 120 are illustrated. By way of example, in its first position A the user equipment 120, for instance, due to a physical barrier 160 might only be capable of communicating with the first network slice 133, but not with the second network slice 135 (due to the longer radio range of the first network slice 133). In such a scenario, embodiments of the invention allow to configure, i.e. prepare a new communication session or resume a terminated communication session with the second network slice 135 by exchanging communication session related control data with the mobile communication network 100 via the first network slice 133. Thus, when the user equipment 120 is in its position B and again capable of communicating with the second network slice 135 the communication session with the second network slice 135 can be more quickly established because the communication session related control data necessary for establishing the communication session with the second network slice 135 is due to the data exchange via the first network slice 133 already available at the user equipment 120.

According to an embodiment, the processing unit 121 of the user equipment 120 can be further adapted to terminate a communication session with the first network slice 133, once the new communication session has been established or the terminated communication session has been resumed with the second network slice 135 on the basis of the communication session related control data exchanged with the first network slice 133.

As illustrated in figure 1, the user equipment 120 can further comprise an electronic or physical subscriber identity module, SIM 127, wherein the SIM 127 is adapted to authorize access of the user equipment 120 (i.e. authenticate the user equipment 120) to the first network slice 133 and/or the second network slice 135. To this end, suitable authentication keys can be stored on the SIM 127.

In an embodiment, where the network entity 150 is implemented as a management server 150 located in the core network of the mobile communication network 100, the processing unit 141 of the network entity 150 can be further configured to implement a discovery mechanism, wherein the discovery mechanism is configured to select, in response to a request by the user equipment 120 for establishing a new communication session or resuming a terminated communication session with the second network slice 135 of the mobile communication network 100, an edge server, such as the edge server 140, from a plurality of candidate edge servers and to provide an application on the selected edge server 140. More specifically, the discovery mechanism can be adapted to dynamically provide a network function for providing a service to the user equipment 120 on the most suitable edge server 140 (also referred to as "Cloudlet"), e.g. the edge server 140 having the smallest latency.

While a particular feature or aspect of the disclosure may have been disclosed with respect to only one of several implementations or embodiments, such feature or aspect may be combined with one or more other features or aspects of the other implementations or embodiments as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention. It is therefore to be understood that within the scope of the appended claims and their equivalents, the invention may be practiced otherwise than as specifically described herein.

## Claims

1. A user equipment (120) for a mobile communication network (100), in particular a 5G mobile communication network (100), wherein the user equipment (120) comprises:
a first communication interface (123) for communicating with a first network slice (133) of the mobile communication network (100);
a second communication interface (125) for communicating with a second network slice (135) of the mobile communication network (100); and
a processing unit (121) in communication with the first communication interface (123) and the second communication interface (125), wherein the processing unit (121) is adapted to exchange data with the first network slice (133) and to configure a data exchange with the second network slice (135) on the basis of the data exchanged with the first network slice (133).

2. The user equipment (120) of claim 1, wherein the first network slice (133) has a longer range, lower power and/or lower bandwidth than the second network slice (135).

3. The user equipment (120) of any one of the preceding claims, wherein the processing unit (121) is adapted to exchange security-relevant control data with the first network slice (133) and to configure the data exchange with the second network slice (135) on the basis of the data exchanged with the first network slice (133) by securing the data exchange with the second network slice (135) on the basis of the security-relevant control data.

4. The user equipment (120) of claim 3, wherein the security-relevant control data comprises a hash value or a cryptographic checksum value of data to be exchanged with the second network slice (135) and/or a cryptographic key for securing the data exchange with the second network slice (135).

5. The user equipment (120) of claim 3 or 4, wherein the processing unit (121) comprises a hardware security enclave, wherein the hardware security enclave is configured to process and/or store the security-relevant control data exchanged with the first network slice (133).

6. The user equipment (120) of any one of the preceding claims, wherein the processing unit (121) is adapted to exchange communication session related control data with the first network slice (133) and to configure the data exchange with the second network slice (135) on the basis of the data exchanged with the first network slice (133) by establishing a new communication session or resuming a terminated communication session with the second network slice (135) on the basis of the communication session related control data exchanged with the first network slice (133).

7. The user equipment (120) of claim 6, wherein the processing unit (121) is adapted to establish the new communication session or resume the terminated communication session with the second network slice (135) on the basis of the communication session related control data exchanged with the first network slice (133), in response to a failed attempt to connect to the second network slice (135) or in response to a termination of a communication session with the second network slice (135).

8. The user equipment (120) of claim 6 or 7, wherein the processing unit (121) is further adapted to terminate a communication session with the first network slice (133), once the new communication session has been established or the terminated communication session has been resumed with the second network slice (135) on the basis of the communication session related control data exchanged with the first network slice (133).

9. The user equipment (120) of any one of the preceding claims, wherein the user equipment (120) further comprises an electronic or physical subscriber identity module, SIM (127), wherein the SIM (127) is adapted to authorize access of the user equipment (120) to the first network slice (133) and/or the second network slice (135).

10. A network entity (140, 150) for a mobile communication network (100), in particular a 5G mobile communication network (100), wherein the network entity (140, 150) comprises:
a first communication interface (143) for communicating via a first network slice (133) of the mobile communication network (100) with a user equipment (120) of the mobile communication network (100);
a second communication interface (145) for communicating via a second network slice (135) of the mobile communication network (100) with the user equipment (120); and
a processing unit (141) in communication with the first communication interface (143) and the second communication interface (145), wherein the processing unit (141) is adapted to exchange data with the user equipment (120) via the first network slice (133) and to configure a data exchange with the user equipment (120) via the second network slice (135) on the basis of the data exchanged with the user equipment (120) via the first network slice (133).

11. The network entity (140, 150) of claim 10, wherein the first network slice (133) has a longer range, lower power and/or lower bandwidth than the second network slice (135).

12. The network entity (140, 150) of claim 10 or 11, wherein the processing unit (141) is adapted to exchange security-relevant control data with the user equipment (120) via the first network slice (133) and to configure the data exchange with the user equipment (120) via the second network slice (135) on the basis of the data exchanged with the user equipment (120) via the first network slice (133) by securing the data exchange with the user equipment (120) via the second network slice (135) on the basis of the security-relevant control data.

13. The network entity (140, 150) of any one of claims 10 to 12, wherein the processing unit (141) is adapted to exchange communication session related control data with the user equipment via the first network slice (133) and to configure the data exchange with the user equipment (120) via the second network slice (135) on the basis of the data exchanged with the user equipment (120) via the first network slice (133) by establishing a new communication session or resuming a terminated communication session with the user equipment (120) via the second network slice (135) on the basis of the communication session related control data exchanged with user equipment (120) via the first network slice (133).

14. The network entity (140) of any one of claims 10 to 13, wherein the network entity (140) comprises an edge server (140) located in or close to a radio access network of the mobile communication network (100).

15. The network entity (150) of any one of claims 10 to 13, wherein the network entity (150) comprises a management server (150) located in a core network of the mobile communication network (100).

16. The network entity (150) of claim 15, wherein the processing unit (141) is further configured to implement a discovery mechanism, wherein the discovery mechanism is configured to select, in response to a request by the user equipment (120) for establishing a new communication session or resuming a terminated communication session with the second network slice (135) of the mobile communication network (100), an edge server (140) and to provide an application on the edge server (140).

17. A mobile communication network (100), in particular a 5G mobile communication network (100), comprising: a first network slice (133), a second network slice (135), a user equipment (120) according to any one of claims 1 to 9 and a network entity (140, 150) according to any one of claims 10 to 16.
